# EUROPÄISCHE PATENTSCHRIFT

(11) **EP 3 877 243 B1**
(45) Veröffentlichungstag und Bekanntmachung des Hinweises auf die Patenterteilung: **09.03.2022**
(21) Anmeldenummer: 20714994.9
(22) Anmeldetag: 25.03.2020
(51) Int. Cl.: B62D 53/10

(54) **SATTELKUPPLUNGSANORDNUNG MIT VERSCHLEISSDETEKTION**
FIFTH-WHEEL COUPLING ARRANGEMENT WITH WEAR DETECTION
ENSEMBLE SELLETTE D'ATTELAGE À DÉTECTION D'USURE

(30) Priorität: 05.04.2019 DE 102019108954
(43) Veröffentlichungstag der Anmeldung: 15.09.2021
(73) Patentinhaber: SAF-HOLLAND GmbH, 63856 Bessenbach (DE)
(72) Erfinder: KÖSTER, Mario, Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2020/058265
(87) Internationale Veröffentlichungsnummer: WO 2020/200940

(56) Entgegenhaltungen:
- EP-A1- 0 509 137
- WO-A1-2018/035566
- WO-A1-2020/051619
- WO-A2-2019/077587
- DE-A1- 4 402 526
- DE-A1- 4 402 528

## Beschreibung

Die Erfindung betrifft eine Sattelkupplungsanordnung mit einem Verschleißdetektor.

Sattelkupplungen sind bereits aus dem Stand der Technik bekannt, diese sind meist auf einem Zugfahrzeug eines Sattelzugs angeordnet und dienen dazu, ein Zugfahrzeug mit einem Sattelauflieger zu verbinden. Diese Sattelkupplungen dienen dazu, eine Zugkraft von dem Zugfahrzeug auf den Sattelauflieger, insbesondere dessen Königszapfen, zu übertragen. Durch die Relativbewegungen während der Fahrt zwischen den Sattelkupplungskomponenten und den Komponenten des Sattelaufliegers findet Verschleiß statt. Dieser Verschleiß wird jedoch trotz seines Auftretens häufig ignoriert und meist erst im Rahmen einer Wartung bestimmt. Daher kann es dazu kommen, dass Teile der Sattelkupplungsplatte derart verschlissen sind, dass es zu einer Gefährdung der Sicherheit kommt.

Die gattungsgemäße EP 0 509 137 A1 betrifft eine Sattelkupplungseinrichtung an einem Schleppfahrzeug, umfassend eine Sattelplatte mit einer Aufnahme für einen Kupplungszapfen eines Nachlauffahrzeugs, einen Kupplungshaken, welcher in einer Kupplungsstellung den Kupplungszapfen in der Aufnahme festlegt, ein Sperrstück, welches in einer Sperrstellung den Kupplungshaken in dessen Kupplungsstellung sperrt und in eine Sperrstellung vorgespannt ist.

Die WO 2018/035566 A1 betrifft ein Anhängersicherheitssystem zum Überwachen eines Fahrzeugs und zumindest eines Anhängers. Das System umfasst zumindest einen Sensor, welcher auf einem Drehtisch des Fahrzeugs angeordnet ist.

Es ist daher Aufgabe der Erfindung, die Sicherheit der Sattelkupplungsanordnung zu erhöhen.

Diese Aufgabe wird mit einer Sattelkupplungsanordnung gemäß dem Anspruch 1 gelöst. Weitere Vorteile, Merkmale und Ausführungsformen ergeben sich aus den Unteransprüchen, der Beschreibung sowie aus den Figuren.

Erfindungsgemäß umfasst eine Sattelkupplungsanordnung zumindest einen Verschleißsensor, bevorzugt eine Vielzahl von Verschleißsensoren, eine Sattelkupplungsplatte, eine beweglich in einer ersten Schließrichtung an der Sattelkupplungsplatte mittel- und/oder unmittelbar gelagerte Schlossklaue, einen beweglich in einer zweiten Schließrichtung an der Sattelkupplungsplatte mittel- und/oder unmittelbar gelagerten Riegelmechanismus, insbesondere mit einem Anschlag, und wobei die Sattelkupplungsplatte eine Einfahröffnung für einen Königszapfen aufweist, wobei insbesondere in einem geschlossenen Zustand der Sattelkupplungsanordnung die Schlossklaue zumindest teilweise in die Einfahröffnung ragt, wobei die Schlossklaue in dem geschlossenen Zustand der Sattelkupplungsanordnung mittel- und/oder unmittelbar formschlüssig ein Ausfahren des Königszapfens aus der Einfahröffnung verhindert und in einem geöffneten Zustand der Sattelkupplungsanordnung ein Ausfahren des Königszapfens aus der Einfahröffnung ermöglicht, wobei insbesondere die Schlossklaue in dem geschlossenen Zustand der Sattelkupplungsanordnung mittel- und/oder unmittelbar formschlüssig mit dem Anschlag kontaktiert und/oder kontaktieren kann, wobei der Verschleißsensor dazu ausgelegt ist, einen Verschleißparameter der Sattelkupplungsanordnung zu überwachen, wobei der Verschleißsensor einen Datenausgang, insbesondere ein Kabel, aufweist. Die erfindungsgemäße Sattelkupplungsanordnung dient dazu, ein Zugfahrzeug und einen Anhänger, insbesondere einen Sattelauflieger, krafttechnisch miteinander zu verbinden. Dies erfolgt insbesondere dadurch, dass die Sattelkupplungsplatte der Sattelkupplungsanordnung eine Einfahröffnung aufweist, durch welche ein Königszapfen in die Sattelkupplungsanordnung geführt werden kann. Der Zustand der Sattelkupplungsanordnung, in welchem ein Ausfahren des Königszapfens aus der Einfahröffnung ermöglicht ist (Einfahren ebenfalls), ist dabei der geöffnete Zustand der Sattelkupplungsanordnung. Um ein Herausfahren des Königszapfens aus der Einfahröffnung der Sattelkupplungsplatte im geschlossenen Zustand zu verhindern, verfügt die Sattelkupplungsanordnung über eine Schlossklaue und einen Riegelmechanismus, insbesondere mit einem Anschlag. Die Schlossklaue ist dabei dasjenige Bauteil und/oder die diejenige Baugruppe der Sattelkupplungsanordnung, welches dazu ausgelegt ist, mittel- oder unmittelbar ein Ausfahren des Königszapfens in dem geschlossenen Zustand der Sattelkupplungsanordnung formschlüssig zu verhindern. In einer bevorzugten Ausführungsform kann die Sattelkupplungsanordnung auch über mehrere Schlossklauen verfügen. Vorteilhafterweise erfolgt dieses formschlüssige Verhindern des Ausfahrens dabei durch einen mittel- und/oder unmittelbaren Kontakt zwischen der Schlossklaue und dem Königszapfen. Um ein Ausfahren des Königszapfens in dem geöffneten Zustand zu ermöglichen, ist die Schlossklaue beispielsweise derart an der Sattelkupplungsplatte mittel- oder unmittelbar gelagert, so dass diese in eine erste Schließrichtung beweglich ist. Die erste Schließrichtung kann sowohl eine translatorische Bewegung sein als auch alternativ oder zusätzlich bevorzugt eine rotatorische Bewegung. Vorteilhafterweise erfolgt diese rotatorische Bewegung dabei um eine erste Rotationsachse. Beispielsweise kann diese erste Rotationsachse durch einen Rotationsbolzen bzw. einen Lagerbolzen gebildet sein, welcher die Schlossklaue gegenüber der Sattelkupplungsplatte lagert. Vorteilhafterweise erstreckt sich dieser Lagerbolzen dabei derart von der Sattelkupplungsplatte, dass dieser sich von einer Fläche aus erstreckt, die der Aufliegerfläche der Sattelkupplungsplatte gegenüberliegenden angeordnet ist. Die Aufliegerfläche der Sattelkupplungsplatte ist diejenige Fläche, welche dazu dient, dass der Anhänger, insbesondere der Sattelauflieger, auf dieser Fläche im angekuppelten Zustand aufliegt. Insbesondere ist diese Aufliegerfläche derart gestaltet, dass diese zum einen königszapfenkontaktfrei im geschlossenen Zustand ist, und darüber hinaus ist die gemittelte Normale dieser Fläche insbesondere parallel zur Erstreckungsrichtung des Königszapfens. Zusätzlich zu der Schlossklaue weist die erfindungsgemäße Sattelkupplungsanordnung auch einen Riegelmechanismus auf, welcher vorteilhafterweise über einen Anschlag verfügt. Dieser Riegelmechanismus dient dazu, die Schlossklaue in dem geschlossenen Zustand der Sattelkupplungsanordnung derart zu fixieren und/oder deren Bewegungsfreiheit derart einzuschränken, dass ein "Heraustreten", welches auch als "Ausfahren" oder "Ausrücken" bezeichnet werden kann, des Königszapfens aus der Sattelkupplungsanordnung verhindert ist. Dieses Verhindern des Öffnens der Sattelkupplungsanordnung erfolgt insbesondere mittel- und/oder unmittelbar formschlüssig durch z.B. ein Kontaktieren der Schlossklaue mit dem Anschlag, wobei nicht unbedingt ein tatsächliches Kontaktieren stattfinden muss, sondern vielmehr sind diese Bauteile dazu ausgelegt, mittel- und/oder unmittelbar kontaktieren zu können, um eine Veränderung der Lage der Schlossklaue in Relation zur Sattelkupplungsplatte formschlüssig - zumindest in eine Richtung - zu verhindern, um ein Austreten des Königszapfens im geschlossenen Zustand aus der Sattelkupplungsanordnung zu verhindern. In anderen Worten kann dies bedeuten, dass zwischen dem Anschlag des Riegelmechanismus und der Schlossklaue auch im geschlossenen Zustand ein gewisses Spiel vorhanden sein kann. Dieser Riegelmechanismus mit dem Anschlag ist dabei derart an der Sattelkupplungsplatte angeordnet, dass dieser in eine zweite Schließrichtung bewegbar ist. Diese zweite Schließrichtung kann insbesondere ebenfalls translatorisch und/oder rotatorisch sein. Bevorzugt ist es, wenn die zweite Schließrichtung eine rotatorische Bewegung ist, wenn diese Rotationsbewegung in derselben Ebene stattfindet wie die erste Schließrichtung. Besonders bevorzugt ist es, wenn der Riegelmechanismus mit dem Anschlag über eine rotatorische Lagerung, insbesondere einem Rotationsbolzen und/oder einem Lagerbolzen, mittel- oder unmittelbar an der Sattelkupplungsplatte gelagert ist. Um eine einfache Bedienung des Riegelmechanismus zu erreichen, kann die Sattelkupplungsanordnung einen Entriegelungsgriff aufweisen, welcher über die Sattelkupplungsplatte hinaussteht. Neben der Sattelkupplungsplatte, der Schlossklaue und dem Riegelmechanismus mit dem Anschlag verfügt die erfindungsgemäße Sattelkupplungsanordnung auch über einen Verschleißsensor, welcher dazu in der Lage ist, einen Verschleißparameter der Sattelkupplungsanordnung bzw. einen Verschleißzustand der Sattelkupplungsanordnung basierend auf dem Verschleißparameter zu überwachen, insbesondere durch das Erfassen von Verschleißsensordaten. Ein solcher Verschleißparameter der Sattelkupplungsanordnung kann beispielsweise durch ein Spiel zwischen Königszapfen und Verschlussklaue, durch die Änderung der Materialstärke der Kupplungsplatte, des Anschlags, des Riegelmechanismus und/oder der Schlossklaue gebildet sein, oder durch eine statische und/oder dynamische Lageänderung der Sattelkupplungskomponenten zueinander, welche jedoch lediglich durch den Verschleiß der Sattelkupplungsanordnung verursacht ist. Beispielsweise kann der Verschleißsensor zur Detektion dieser Verschleißparameter ein induktiver Näherungsschalter, ein Ultraschallsensor oder ein ähnlich geeigneter berührungsloser Sensor sein. Alternativ oder zusätzlich bevorzugt kann der Sensor ein berührender Sensor sein. Weiter alternativ oder zusätzlich bevorzugt kann es sich bei dem Verschleißsensor auch um einen Vibrationssensor handeln. Der erfindungsgemäße Verschleißsensor verfügt über einen Datenausgang, insbesondere ein Kabel, um die von ihm erfassten (rohen) Messdaten zu übermitteln. Beispielsweise kann dieser Datenausgang dabei in Form eines Kabels oder in Form einer drahtlosen Übertragung, wie zum Beispiel Bluetooth, WLAN oder Funknetze, ausgestaltet sein. Durch die erfindungsgemäße Ausgestaltung der Sattelkupplungsanordnung - unter Verwendung eines Verschleißsensors mit einem Datenausgang - wird ermöglicht, dass eine automatische Überwachung der Sattelkupplungsanordnung möglich ist. Daher kann kontinuierlich der Verschleißzustand durch die Erfassung von mindestens einem Verschleißparameter der Sattelkupplungsanordnung erfasst bzw. bestimmt werden, so dass hierdurch die durch den Verschleiß verursachten Gefährdungspotenziale der Sattelkupplungsanordnung reduziert werden können, da frühzeitig ein, insbesondere kritischer, Verschleißzustand erkannt werden kann.

Vorteilhafterweise weist die Sattelkupplungsanordnung zumindest zwei, bevorzugt zumindest drei, Verschleißsensoren auf, wobei die zumindest zwei, bevorzugt zumindest drei, Verschleißsensoren vorteilhafterweise unterschiedliche Verschleißparameter der Sattelkupplungsanordnung überwachen. Durch das Vorsehen von mehreren Verschleißsensoren kann der Verschleißzustand der Sattelkupplungsanordnung zuverlässiger überwacht werden. Bevorzugt ist es, wenn diese einzelnen Verschleißsensoren unterschiedliche Verschleißparameter der Sattelkupplungsanordnung erfassen, da insbesondere auch durch die Korrelation dieser verschiedenen Verschleißsensordaten bzw. Verschleißparameter ein weiterer Informationsgehalt gewonnen werden kann. Vorteilhaft ist es, wenn die verschiedenen Verschleißsensoren auf unterschiedlichen Messmethoden basieren, so dass diese zusätzlich und/oder alternativ als redundante Messinformationen verwendet werden können.

Erfindungsgemäß ist zumindest ein Verschleißsensor dazu ausgelegt, eine Materialstärke der Sattelkupplungsplatte, insbesondere im Bereich einer Aufliegerfläche, zu bestimmen und/oder zu überwachen. Durch die Bestimmung der Materialstärke der Sattelkupplungsplatte kann in zuverlässiger Weise deren Verschleiß beurteilt werden. Insbesondere bei der Messung der Materialstärke der Sattelkupplungsplatte im Bereich der Aufliegerfläche kann sichergestellt werden, dass trotz des auf der Aufliegerfläche aufgetragenen Schmiermittels der Verschleiß sicher detektiert werden kann. Die maßgebliche Materialstärke ist insbesondere die Materialstärke der Sattelkupplungsplatte, vorteilhafterweise im Bereich der Aufliegerfläche, in Richtung senkrecht zu der maßgeblichen Oberfläche. Maßgeblich für die Messung der Materialstärke sind dabei insbesondere keine Verunreinigungen oder Schmierstoffe, welche auf der Sattelkupplungsplatte aufgetragen und/oder befindlich sind. In anderen Worten bedeutet dies, dass die Materialstärke der Sattelkupplungsplatte lediglich durch das eigentliche Material der Sattelkupplungsplatte gebildet ist. Beispielsweise kann ein Ultraschallsensor genutzt werden, um die Materialstärke der Sattelkupplungsplatte erfassen zu können.

Bevorzugt weist die Sattelkupplungsanordnung zumindest einen Lagerbock und eine Lagerschale auf, wobei die Lagerschale die Sattelkupplungsplatte relativ zum Lagerbock abstützt, wobei der Lagerbock eine Aufstandsfläche aufweist, wobei die Aufstandsfläche dazu ausgelegt ist, den Lagerbock an einem Fahrzeug mittel- und/oder unmittelbar abzustützen, wobei zumindest ein Verschleißsensor dazu ausgelegt ist, den Verschleißzustand der Lagerschale zu überwachen. Beispielsweise kann dies dadurch erfolgen, dass die Materialdicke bzw. -stärke der Lagerschale durch den zumindest einen Verschleißsensor bestimmt wird. Beispielsweise kann dies durch die Bestimmung eines Abstands der die Lagerschale umgebenden Bauteile und/oder durch die Bestimmung der eigentlichen Materialdicke der Lagerschale geschehen. Alternativ bevorzugt oder zusätzlich bevorzugt kann der Verschleißzustand der Lagerschale, welcher ein Verschleißparameter der Sattelkupplungsanordnung darstellt, dadurch überwacht werden, dass eine Absenkung der Sattelkupplungsplatte gegenüber einer Aufstandsfläche bestimmt wird. Dies kann beispielsweise durch Ultraschall, Radar, oder durch einen induktiven Näherungsschalter als Verschleißsensor erreicht werden.

In einer bevorzugten Ausführungsform liegt die Aufstandsfläche in einer Aufstandsebene, wobei der zumindest eine Verschleißsensor dazu ausgelegt ist, den Verschleißzustand der Lagerschale durch die Bestimmung eines Abstands der Aufstandsebene zu einem Teil der Sattelkupplungsplatte, insbesondere einer Messfläche der Sattelkupplungsplatte, zu überwachen. Hierdurch kann eine besonders einfache und sichere Bestimmung dieses Verschleißparameters bzw. des daraus resultierenden Verschleißzustandes der Lagerschale erreicht werden. Die Aufstandsebene der Aufstandsfläche ist dabei insbesondere diejenige Ebene, welche durch die Flächen gebildet ist, die dazu ausgelegt sind, den Lagerbock mittel- oder unmittelbar gegenüber einem Fahrzeug abzustützen. In anderen Worten ist die Aufstandsfläche bzw. die Aufstandsebene diejenige Fläche oder Ebene, an welcher der Lagerbock an dem Fahrzeug, insbesondere dem Nutzfahrzeug, angeordnet ist.

Vorteilhafterweise ist die Messfläche konkav. Durch die konkave Ausgestaltung der Messfläche kann die Wahrscheinlichkeit des Auftretens von Fehlmessungen reduziert werden. Besonders bevorzugt ist es, wenn die Messfläche derart ausgestaltet ist, dass der Brennpunkt (bzw. die Brennpunktachse) der konkav ausgestalteten Messfläche auf einer rotatorischen Lagerachse der Sattelkupplungsanordnung bzw. der Sattelkupplungsplatte liegt. Alternativ oder zusätzlich bevorzugt liegt der entsprechende Verschleißsensor in dem Brennpunkt bzw. auf der Brennpunktachse. Der Brennpunkt ist derjenige Punkt, in welchen alle nach außen weisenden Normalen der Oberfläche der Messfläche sich schneiden. Insbesondere sei jedoch darauf hingewiesen, dass - bei einer gekrümmten Ausgestaltung der Messfläche bezüglich lediglich einer Achse - nicht nur ein Brennpunkt existiert sondern eine Brennpunktachse (z.B. bei einer halbzylindrischen konkaven Ausgestaltung der Messfläche). Alternativ oder zusätzlich bevorzugt kann die Messfläche auch konvex ausgestaltet sein.

In einer vorteilhaften Weiterbildung ist die Messfläche Teil eines Spannbügels. Der Spannbügel ist dabei insbesondere das Bauteil der Sattelkupplungsanordnung, welches die Lagerschale mit der Sattelkupplungsplatte verspannt. Hierdurch kann in sehr genauer Weise eine indirekte Verschleißmessung erfolgen.

Bevorzugt ist zumindest ein Verschleißsensor ein berührungsloser Sensor, insbesondere ein Ultraschallsensor oder ein induktiver Näherungsschalter. Durch die Ausgestaltung zumindest eines Verschleißsensors als berührungsloser Sensor kann erreicht werden, dass dieser Verschleißsensor selber verschleißarm operiert, so dass eine besonders lange Lebensdauer des Sensors resultiert. Neben einer berührungslosen Ausgestaltung des Verschleißsensors als Ultraschallsensor kann dieser auch als ein induktiver, als ein kapazitiver oder als ein optischer Sensor ausgestaltet sein. Zusätzlich bevorzugt kann der Verschleißsensor auch unter Ausnutzung des Piezokeramischen-Effekts ausgestaltet sein. Auch diese Art der Ausgestaltung des Verschleißsensors weist eine hohe Lebensdauer auf, denn die Piezokeramiken weisen eine besonders verschleißarme Art der Messerfassung auf.

Besonders bevorzugt ist zumindest ein Verschleißsensor ein berührender Sensor. Hierdurch können insbesondere Kosten gespart werden.

Vorteilhafterweise ist zumindest ein Verschleißsensor dazu ausgelegt, ein, insbesondere durch Verschleiß bedingtes, Spiel eines Teils des Riegelmechanismus zu überwachen, insbesondere durch die Bestimmung des Abstands des Teiles des Riegelmechanismus zu einem Messpunkt der Sattelkupplungsplatte, vorteilhafterweise in Richtung der zweiten Schließrichtung. Dieser Verschleiß des Riegelmechanismus wird insbesondere in Relation zu einem Messpunkt bestimmt, wobei der Messpunkt sich vorteilhafterweise an der Sattelkupplungsplatte befinden kann. Beispielsweise kann der Messpunkt durch einen Vorsprung der Sattelkupplungsplatte gebildet sein. Alternativ oder zusätzlich bevorzugt kann der Messpunkt auch durch einen Vorsprung gebildet sein, welcher an der Sattelkupplungsplatte kraft-, form- und/oder stoffschlüssig festgelegt ist. Die Messung des Abstandes und/oder des Spiels erfolgt vorteilhafterweise in die zweite Schließrichtung. Sollte die zweite Schließrichtung eine rotatorische Richtung sein, so erfolgt die Messung vorteilhafterweise in eine Richtung tangential zur zweiten Schließrichtung, wobei die maßgebliche tangentiale Richtung insbesondere diejenige Richtung ist, welche tangential zur zweiten Schließrichtung in der geschlossenen Position der Sattelkupplungsanordnung ist.

Vorteilhafterweise erfolgt die Bestimmung der Verschleißparameter der Sattelkupplungsanordnung im geschlossenen und/oder im geöffneten Zustand. In anderen Worten kann dies bedeuten, dass der Verschließsensor dazu ausgelegt ist, Messwerte im geschlossenen und/oder im geöffneten Zustand der Sattelkupplungsanordnung zu erfassen. Hierdurch kann eine besonders vielfältig einsetzbare Verschließüberwachung erfolgen.

Vorteilhafterweise ist zumindest ein Verschleißsensor ein Vibrationssensor. Durch die Überwachung der Vibrationen, insbesondere den Vibrationen der Schlossklaue, der Sattelkupplungsplatte und/oder des Riegelmechanismuses, als Verschleißparameter kann durch die erfasste Frequenz und/oder die erfasste Amplitude, vorteilhafterweise bei der Resonanzfrequenz des jeweiligen Bauteils, Rückschluss auf den Verschleißzustand des jeweiligen Bauteils gezogen werden. Beispielsweise steigt die Amplitude der Schwingungen der Riegelanordnung und/oder der Schlossklaue in der Regel stark an, wenn diese beiden Bauteile relativ zueinander ein besonders großes Spiel, insbesondere im geschlossenen Zustand, aufweisen. Daher bietet der Vibrationssensor eine besonders einfache und zuverlässige Messmethode. Darüber hinaus kann mit einem Vibrationssensor - und den anderen Arten von Verschleißsensoren - auch während des Betriebs und/oder während der Fahrt gemessen werden, denn die Resonanzfrequenzen, welche durch den Betrieb und/oder die Fahrt verursacht werden liegen meist in einem deutlich tieferen Frequenzband als die verschleißbedingten Schwingungen. Hierzu kann es nötig sein, dass die (rohen) Messdaten des Verschleißsensors in geeigneter Weise von Störeinflüssen bereinigt werden müssen, daher kann eine geeignete Bereinigung der Daten nötig sein. Dies kann beispielsweise durch eine Tiefpass- und/oder Hochpassfilterung und/oder durch eine Glättung und/oder durch eine Interpolation der Daten erfolgen. Diese "Messwertbereinigung" kann beispielsweise durch eine entsprechend ausgelegte Auswerteinheit, eine SPS und/oder durch eine Filterbank erfolgen, welche datentechnisch direkt und/oder indirekt mit dem Datenausgang des Verschleißsensors verbunden ist/sind. Es sei an dieser Stelle jedoch darauf hingewiesen, dass die "Messwertbereinigung" bei der Fahrt und/oder bei Stillstand des Fahrzeugs nicht nur bei der Verwendung von Vibrationssensoren angewendet werden kann, sondern auch grundlegend bei sämtlichen beschriebenen Verschleißsensorarten eingesetzt werden kann.

In einer vorteilhaften Weiterbildung überwacht der Vibrationssensor die Schwingung der Schlossklaue, insbesondere in Richtung der ersten Schließrichtung, und/oder wobei die Sattelkupplungsanordnung einen Königszapfen aufweist, und wobei der Vibrationssensor die Schwingung des Königszapfens überwacht. Durch die Überwachung der Vibrationen der Schlossklaue als Verschleißparameter kann in einfacher Weise auf den Verschleißzustand des Systems, insbesondere in Hinblick auf die Lagerung der Schlossklaue und der Abnutzung des Anschlags, Rückschlüsse gezogen werden. Bevorzugt weist die Sattelkupplungsanordnung einen Königszapfen auf. Durch die Überwachung der Vibrationen des Königszapfens als Verschleißparameter kann in einfacher Weise das Spiel zwischen dem Königszapfen und den Komponenten festgestellt werden, welche im geschlossenen Zustand den Königszapfen umgeben. In anderen Worten kann durch eine Anordnung des Vibrationssensors derart, dass dieser die Schwingungen des Königszapfens überwacht, erreicht werden, dass die Bewegungsfreiheit des Königszapfens im geschlossenen Zustand in der Sattelkupplungsanordnung festgestellt werden kann. Daher können durch die Anordnung des Vibrationssensors derart, dass dieser die Schwingungen der Schlossklaue und/oder des Königszapfens überwacht, in einfacher Weise Rückschlüsse auf den Verschleißzustand der Sattelkupplungsanordnung gezogen werden, insbesondere durch eine komparative Überwachung bzw. Bestimmung der Phasenlage der Schwingungen zueinander.

In einer vorteilhaften Ausführungsform weist die Sattelkupplungsanordnung zumindest zwei Verschleißsensoren auf, die Vibrationssensoren sind. Durch die Anordnung der zwei Vibrationssensoren wird ermöglicht, dass insbesondere Schwingungsmoden, welche einen Knotenpunkt an der Lokation des einen Schwingungssensors aufweisen, sicher bzw. zumindest zuverlässiger durch den zweiten Vibrationssensor erfasst werden können. Somit ermöglicht die Anordnung von zumindest zwei Vibrationssensoren eine sichere Überwachung der Schwingungen der Sattelkupplungsanordnung. Vorteilhafterweise sind diese beiden Vibrationssensoren an unterschiedlichen Bauteilen und/oder zur Überwachung der Schwingung unterschiedlicher Komponenten der Sattelkupplungsanordnung ausgelegt.

In einer bevorzugten Weiterbildung sind zwei der Vibrationssensoren der Sattelkupplungsanordnung mit einer Vergleichseinheit verbunden, wobei die Vergleichseinheit dazu ausgelegt ist, die Messergebnisse der Vibrationssensoren zu vergleichen und wobei die Vergleichseinheit dazu ausgelegt ist, einen Verschleißzustand der Sattelkupplung aus dem Vergleich der Messergebnisse bzw. der Verschließparameter zu bestimmen. Beispielsweise kann die Vergleichseinheit ein Teil einer Auswerteinheit sein. Insbesondere kann der Vergleich sowohl im Zeitbereich als auch im Frequenzbereich stattfinden. Besonders bevorzugt ist es, wenn dieser Vergleich sowohl im Frequenzbereich als auch im Zeitbereich, insbesondere durch eine zeitlich lokale Transformation, erfolgt, wie beispielsweise mittels einer Gabor-Transformation. Durch die Verwendung der zeitlich lokalen Transformationen der Daten in den Frequenzbereich kann sowohl eine differenzierte Betrachtung im Frequenzbereich als auch im Zeitbereich gleichzeitig stattfinden, so dass ein sichererer Rückschluss auf den Verschleißzustand der Sattelkupplungsanordnung erfolgen kann.

Bevorzugt ist der Datenausgang des Verschleißsensors, insbesondere alle Datenausgänge der Verschleißsensoren, informationstechnisch mit einer Auswerteinheit verbunden, wobei die Auswerteinheit dazu ausgelegt ist, einen Verschleißzustand der Sattelkupplungsanordnung auf Basis der Überwachungsdaten des Verschleißsensors zu bestimmen. In anderen Worten kann dies bedeuten, dass zumindest ein Verschleißsensor vorteilhafterweise alle Verschleißsensoren mit einer Auswerteinheit, insbesondere einem Computer oder einer SPS-Steuereinheit derart datentechnisch verbunden ist, dass die erfassten Überwachungsdaten bzw. Messdaten der Verschleißsensoren an diese Überwachungseinheit übertragen werden können. Vorteilhafterweise ist die Auswerteinheit dabei ein Teil der Sattelkupplungsanordnung und/oder an der Sattelkupplungsanordnung angeordnet. Besonders zweckmäßig ist es, um den Informationsgehalt der erfassten Verschleißdaten bzw. Messdaten der Verschleißsensoren zu erhöhen, wenn die Auswerteinheit zwischen verschiedensten Messdaten Korrelationsanalysen durchführt. Hierdurch kann der Informationsgehalt der Verschleißsensordaten erhöht werden. Zusätzlich oder alternativ bevorzugt kann die Bestimmung des Verschleißzustands unter Verwendung eines neuronalen Netzes und/oder einer Zeitreihen-Analyse erfolgen. Hierzu ist es bevorzugt wenn die Auswerteinheit dazu ausgelegt ist, mittels eines neuronalen Netzes und/oder mittels einer Zeitreihenanalyse den Verschleißzustand der Sattelkupplungsanordnung zu bestimmen. Die benötigten Trainingsdaten des neuronalen Netzes können beispielsweise durch Messungen an neu hergestellten und an alten - bei der Wartung ausgetauschten - Sattelkupplungsanordnungen bereitgestellt werden.

In einer bevorzugten Weiterbildung ist die Auswerteinheit mit einer Darstellungseinheit verbunden, wobei die Darstellungseinheit dazu ausgelegt ist, den von der Auswerteinheit bestimmten Verschleißzustand der Sattelkupplungsanordnung darzustellen. Vorteilhafterweise erfolgt die Darstellung des Verschleißzustandes der Sattelkupplungsanordnung dabei derart, dass der Sattelkupplungsanordnungsverschleißzustand durch ein Ampelsystem dargestellt wird. Dieses Ampelsystem kann dabei sowohl für jeden einzelnen Messwert der jeweiligen Verschleißsensoren bzw. für jeden einzelnen Verschleißparameter und/oder durch die Darstellung einer Ampel für einen gesamten Verschleißzustand der Sattelkupplungsanordnung erfolgen. Bevorzugt erfolgt die Bestimmung des gesamten Verschleißzustandes der Sattelkupplungsanordnung dabei durch eine geeignete Gewichtung der einzelnen Verschleißparameter bzw. der einzelnen Messdaten der einzelnen Verschleißsensoren. Die Darstellungseinheit kann beispielsweise Teil eines Armaturenbrettes eines Zugfahrzeugs sein und/oder ein separater Bildschirm sein, welcher innerhalb des Fahrerhauses angeordnet ist. Alternativ oder zusätzlich bevorzugt kann die Darstellungseinheit auch durch ein visuelles Mittel gebildet sein, welches im Bereich der Sattelkupplungsanordnung und/oder unmittelbar an der Sattelkupplungsanordnung, insbesondere der Sattelkupplungsplatte, angeordnet ist. Hierdurch ist es möglich, dass der Benutzer der Sattelkupplungsanordnung unmittelbar über die Darstellungseinheit von dem Verschleißzustand der Sattelkupplungsanordnung informiert wird.

Weitere Vorteile und Merkmale der vorliegenden Erfindung ergeben sich aus der nachfolgenden Beschreibung mit Bezug auf die Figuren. Einzelne Merkmale der dargestellten Ausführungsformen können dabei auch in anderen Ausführungsformen eingesetzt werden, sofern dies nicht ausdrücklich ausgeschlossen wurde.

Es zeigen:
- Fig. 1: eine untere Ansicht einer erfindungsgemäßen Sattelkupplungsanordnung;
- Fig. 2: eine Detailansicht des Riegelmechanismus und der Schlossklaue der Sattelkupplungsanordnung;
- Fig. 3: eine Seitenansicht einer erfindungsgemäßen Sattelkupplungsanordnung;
- Fig. 4: einen Schnitt durch eine erfindungsgemäße Sattelkupplungsanordnung; und
- Fig.5 und Fig. 6: weitere erfindungsgemäße Ausführungsformen.

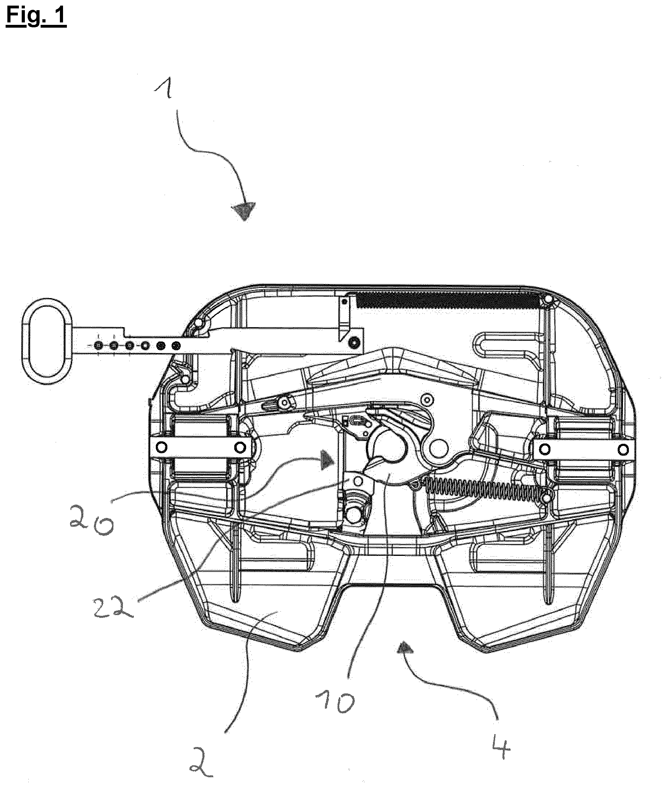

In der **Figur** 1 ist eine Sattelkupplungsanordnung 1 dargestellt, wobei diese Sattelkupplungsanordnung 1 von unten dargestellt ist, um eine einfache Art der Darstellung zu erreichen. Die erfindungsgemäße Sattelkupplungsanordnung 1 verfügt über einen Riegelmechanismus 20, der einen Anschlag 22 umfasst. Dieser Anschlag 22 ist beispielsweise aus einem metallischen Werkstoff, insbesondere Gleitlagerwerkstoff, und/oder aus einen Kunststoff ausgebildet. Der Anschlag 22 ist fest mit dem Riegelmechanismus verbunden und bewegt sich mit diesem mit. Der Anschlag 22 kontaktiert dabei unmittelbar mit der Schlossklaue 10, so dass in einem geschlossenen Zustand der Sattelkupplungsanordnung 1 ein Königszapfen nicht aus der Einfahröffnung 4 der Sattelkupplungsplatte 2 hinaustreten kann.

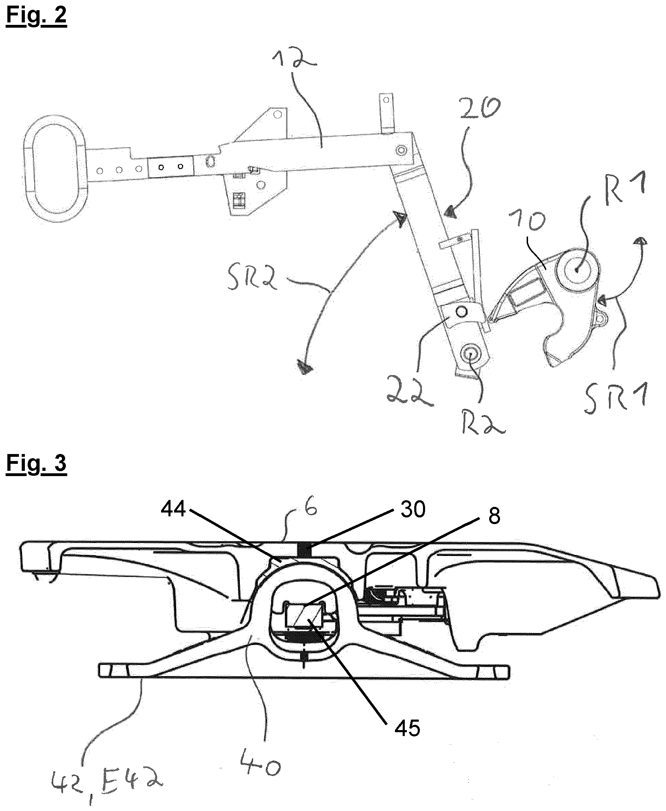

In der **Figur** 2 ist eine Detailansicht des Riegelmechanismus 20 und der Schlossklaue 10 der erfindungsgemäßen Sattelkupplungsanordnung 1 dargestellt. Um den Riegelmechanismus 20 zu betätigen, verfügt die Sattelkupplungsanordnung 1 über einen Entriegelungsgriff 12, um eine Verlagerung des Riegelmechanismus 20 und des Anschlags 22 in Richtung der zweiten Schließrichtung SR2 - durch eine manuelle Betätigung - zu erreichen. In dem dargestellten Ausführungsbeispiel ist die zweite Schließrichtung SR2 dabei eine Rotationsbewegung um die zweite Rotationsachse R2. In dem in Figur 2 dargestellten geöffneten Zustand der Sattelkupplungsanordnung 1 kontaktiert die Schlossklaue 10 die Riegelanordnung 20, insbesondere den Anschlag 22, nicht, so dass in der dargestellten Ausführungsform ein Ausführen eines Königszapfens aus der Sattelkupplungsanordnung ermöglicht ist. Die Schlossklaue 10 ist, um vom geöffneten in den geschlossenen Zustand überführt zu werden, derart gelagert, dass diese entlang der ersten Schließrichtung SR1 beweglich ist. In dem in Figur 2 dargestellten Ausführungsbeispiel ist die erste Schließrichtung SR1 eine rotatorische Bewegung um die erste Rotationsachse R1.

In der **Figur** 3 ist eine Seitenansicht einer erfindungsgemäßen Sattelkupplungsanordnung 1 gezeigt, welche über einen Verschleißsensor 30 verfügt, der dazu ausgelegt ist, einen Verschleißparameter der Sattelkupplungsanordnung zu detektieren. In der dargestellten Ausführungsform misst der Verschleißsensor 30 einen Abstand zu der Messfläche 8, welche Teil eines Spannbügels 45 ist. Hierdurch kann unter anderem indirekt auf die Materialstärke der Lagerschale 44 - als gemessener Verschleißparameter - rückgeschlossen werden. Die Sattelkupplungsanordnung 1 verfügt über einen Lagerbock 40, welcher eine Aufstandsfläche 42 aufweist. Diese Aufstandsfläche 42 liegt in der Aufstandsebene E42. Distal gegenüberliegenden zu der Aufstandsebene E42 ist die Aufliegerfläche 6 der Sattelkupplungsplatte 2 befindlich. Diese Aufliegerfläche 6 kann beispielsweise parallel zur Aufstandsebene E42 ausgebildet sein, wie es beispielhaft in der Figur 3 dargestellt ist.

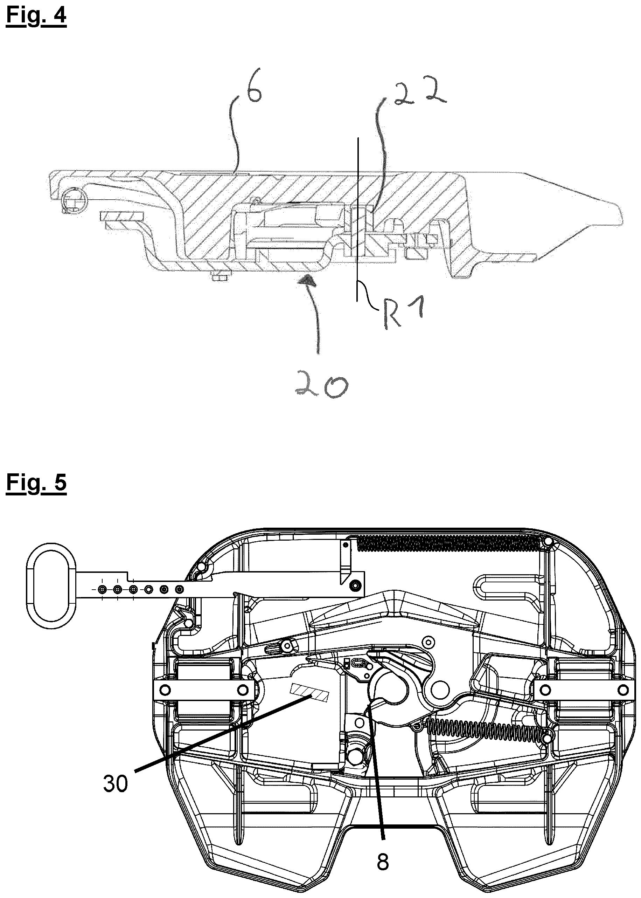

In der **Figur** 4 ist ein Schnitt durch eine erfindungsgemäße Sattelkupplungsanordnung 1 gezeigt. Der Riegelmechanismus 20 verfügt über einen Anschlag 22, welcher über einen Bolzen mit dem Hauptriegel des Riegelmechanismuses 20 verbunden ist. Dieser Hauptriegel kann dabei mittel- oder unmittelbar mit dem Entriegelungsgriff 12 in Eingriff sein.

In der **Figur** 5 ist eine Ausgestaltung einer erfindungsgemäßen Sattelkupplungsanordnung 1 mit einem Verschleißsensor 30 gezeigt, der einen Abstand zu der Messfläche 8 erfasst.

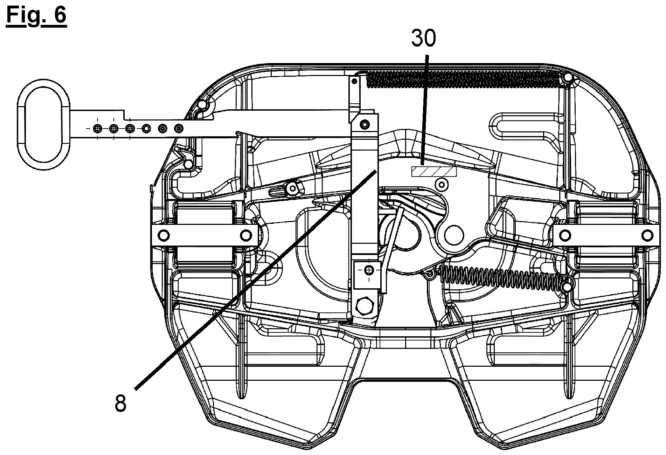

In der **Figur** 6 ist eine weitere Ausgestaltung einer erfindungsgemäßen Sattelkupplungsanordnung 1 mit einem Verschleißsensor 30 gezeigt, der einen Abstand zu der Messfläche 8 erfasst. Die Messfläche 8 befindet sich dabei auf dem Hauptriegel des Riegelmechanismus.

### Bezugszeichenliste:

- 1: Sattelkupplungsanordnung
- 2: Sattelkupplungsplatte
- 4: Einfahröffnung
- 6: Aufliegerfläche
- 8: Messfläche
- 10: Schlossklaue
- 12: Entriegelungsgriff
- 20: Riegelmechanismus
- 22: Anschlag
- 30: Verschleißsensor
- 40: Lagerbock
- 42: Aufstandsfläche
- 44: Lagerschale
- 45: Spannbügel
- E42: Aufstandsebene
- SR1: erste Schließrichtung
- SR2: zweite Schließrichtung
- R1: erste Rotationsachse
- R2: zweite Rotationsachse

## Patentansprüche

1. Sattelkupplungsanordnung (1), umfassend
zumindest einen Verschleißsensor (30), bevorzugt eine Vielzahl von Verschleißsensoren (30),
eine Sattelkupplungsplatte (2),
eine beweglich in eine erste Schließrichtung (SR1) an der Sattelkupplungsplatte (2) mittel und/oder unmittelbar gelagerte Schlossklaue (10),
einen beweglich in eine zweite Schließrichtung (SR2) an der Sattelkupplungsplatte (2) mittel und/oder unmittelbar gelagerten Riegelmechanismus (20), insbesondere mit einem Anschlag (22),
wobei die Sattelkupplungsplatte (2) eine Einfahröffnung (4) für einen Königszapfen aufweist,
wobei die Schlossklaue (10) in einem geschlossenen Zustand der Sattelkupplungsanordnung (1) mittelbar und/oder unmittelbar formschlüssig ein Ausfahren des Königszapfens aus der Einfahröffnung (4) verhindert und in einem geöffneten Zustand der Sattelkupplungsanordnung (1) ein Ausfahren des Königszapfens aus der Einfahröffnung (4) ermöglicht,
wobei der Verschleißsensor (30) dazu ausgelegt ist, einen Verschleißparameter der Sattelkupplungsanordnung (1) zu überwachen, und
wobei der Verschleißsensor (30) einen Datenausgang, insbesondere ein Kabel, aufweist,
**dadurch gekennzeichnet, dass** zumindest ein Verschleißsensor (30) dazu ausgelegt ist, eine Materialstärke der Sattelkupplungsplatte (2), insbesondere im Bereich einer Aufliegerfläche (6), zu bestimmen und/oder zu überwachen.

2. Sattelkupplungsanordnung (1) gemäß Anspruch 1,
wobei die Sattelkupplungsanordnung (1) zumindest zwei, bevorzugt zumindest drei, Verschleißsensoren (30) aufweist,
wobei die zumindest zwei, bevorzugt zumindest drei, Verschleißsensoren (30) vorteilhafterweise unterschiedliche Verschleißparameter der Sattelkupplungsanordnung (1) überwachen.

3. Sattelkupplungsanordnung (1) gemäß einem der vorhergehenden Ansprüche,
wobei die Sattelkupplungsanordnung (1) zumindest einen Lagerbock (40) und eine Lagerschale (44) aufweist,
wobei die Lagerschale (44) die Sattelkupplungsplatte (2) relativ zum Lagerbock (40) abstützt,
wobei der Lagerbock (40) eine Aufstandsfläche (42) aufweist,
wobei die Aufstandsfläche (42) dazu ausgelegt ist, den Lagerbock (40) an einem Fahrzeug mittel und/oder unmittelbar abzustützen,
wobei zumindest ein Verschleißsensor (30) dazu ausgelegt ist, den Verschleißzustand der Lagerschale (44) zu überwachen.

4. Sattelkupplungsanordnung (1) gemäß Anspruch 3,
wobei die Aufstandsfläche (42) in einer Aufstandsebene (E42) liegt,
wobei der zumindest eine Verschleißsensor (30) dazu ausgelegt ist, den Verschleißzustand der Lagerschale (44) durch die Bestimmung eines Abstands der Aufstandsebene (E42) zu einem Teil der Sattelkupplungsplatte (2), insbesondere einer Messfläche (8) der Sattelkupplungsplatte (2), zu überwachen.

5. Sattelkupplungsanordnung (1) gemäß Anspruch 4,
wobei die Messfläche (8) konkav ist.

6. Sattelkupplungsanordnung (1) gemäß Anspruch 4 oder 5,
wobei die Messfläche (8) teil eines Spannbügels (45) ist.

7. Sattelkupplungsanordnung (1) gemäß einem der vorhergehenden Ansprüche,
wobei zumindest ein Verschleißsensor (30) ein berührungsloser Sensor ist, insbesondere ein Ultraschallsensor.

8. Sattelkupplungsanordnung (1) gemäß einem der vorhergehenden Ansprüche,
wobei zumindest ein Verschleißsensor (30) dazu ausgelegt ist, ein, insbesondere durch Verschleiß bedingtes, Spiel eines Teils des Riegelmechanismuses (20) zu überwachen,
insbesondere durch die Bestimmung des Abstands des Teils des Riegelmechanismuses (20) zu einem Messpunkt der Sattelkupplungsplatte (2), vorteilhafterweise in Richtung der zweiten Schließrichtung (SR2).

9. Sattelkupplungsanordnung (1) gemäß einem der vorhergehenden Ansprüche,
wobei zumindest ein Verschleißsensor (30) ein Vibrationssensor ist.

10. Sattelkupplungsanordnung (1) gemäß Anspruch 9,
wobei der Vibrationssensor die Schwingungen der Schlossklaue (10), insbesondere in Richtung der ersten Schließrichtung (SR1), überwacht und/oder
wobei die Sattelkupplungsanordnung (1) einen Königszapfens aufweist, und
wobei der Vibrationssensor die Schwingungen des Königszapfens überwacht.

11. Sattelkupplungsanordnung (1) gemäß Anspruch 9 oder 10,
wobei die Sattelkupplungsanordnung (1) zumindest zwei Verschleißsensor (30) aufweist, die Vibrationssensoren sind.

12. Sattelkupplungsanordnung (1) gemäß Anspruch 11,
wobei die Sattelkupplungsanordnung (1) zwei der Vibrationssensoren mit einer Vergleichseinheit verbunden sind,
wobei die Vergleichseinheit dazu ausgelegt ist, die Messergebnisse der Vibrationssensoren zu vergleichen und
wobei die Vergleichseinheit dazu ausgelegt ist, einen Verschleißzustand der Sattelkupplung aus dem Vergleich der Messergebnisse zu bestimmen.

13. Sattelkupplungsanordnung (1) gemäß einem der vorhergehenden Ansprüche,
wobei der Datenausgang zumindest eines Verschleißsensors (30), insbesondere alle Datenausgänge der Verschleißsensoren (30), informationstechnisch mit einer Auswerteinheit (60) verbunden ist/sind,
wobei die Auswerteinheit (60) dazu ausgelegt ist, einen Verschleißzustand der Sattelkupplungsanordnung (1) auf Basis der Überwachungsdaten des Verschleißsensors (30) zu bestimmen.

14. Sattelkupplungsanordnung (1) gemäß Anspruch 13,
wobei die Auswerteinheit (60) mit einer Darstellungseinheit (62) verbunden ist,
wobei die Darstellungseinheit (62) dazu ausgelegt ist, den von der Auswerteinheit (60) bestimmten Verschleißzustand der Sattelkupplungsanordnung (1) darzustellen.

## Claims

1. A fifth-wheel coupling arrangement (1), comprising
at least one wear sensor (30), preferably a plurality of wear sensors (30),
a fifth-wheel coupling plate (2),
a lock claw (10) mounted indirectly and/or directly on the fifth-wheel coupling plate (2) so as to be movable in a first closing direction (SR1),
a locking mechanism (20), in particular with a stop (22), which is mounted indirectly and/or directly on the fifth-wheel coupling plate (2) so as to be movable in a second closing direction (SR2),
wherein the fifth-wheel coupling plate (2) has an insertion opening (4) for a king pin,
wherein the lock claw (10) indirectly and/or directly positively prevents the king pin from moving out of the insertion opening (4) in a closed state of the fifth-wheel coupling arrangement (1) and allows the king pin to move out of the insertion opening (4) in an open state of the fifth-wheel coupling arrangement (1),
wherein the wear sensor (30) is designed to monitor a wear parameter of the fifth-wheel coupling arrangement (1), and
wherein the wear sensor (30) has a data output, in particular a cable, **characterized in that** at least one wear sensor (30) is designed to determine and/or monitor a material thickness of the fifth-wheel coupling plate (2), in particular in the region of a trailer surface (6).

2. The fifth-wheel coupling arrangement (1) according to claim 1,
wherein the fifth-wheel coupling arrangement (1) comprises at least two, preferably at least three, wear sensors (30),
wherein the at least two, preferably at least three, wear sensors (30) advantageously monitor different wear parameters of the fifth-wheel coupling arrangement (1).

3. The fifth-wheel coupling arrangement (1) according to any one of the preceding claims,
wherein the fifth-wheel coupling arrangement (1) comprises at least one bearing block (40) and a bearing shell (44),
wherein the bearing shell (44) supports the fifth-wheel coupling plate (2) relative to the bearing block (40),
wherein the bearing block (40) has a contact area (42),
wherein the contact area (42) is designed to indirectly and/or directly support the bearing block (40) on a vehicle,
wherein at least one wear sensor (30) is designed to monitor the state of wear of the bearing shell (44).

4. The fifth-wheel coupling arrangement (1) according to claim 3,
wherein the contact area (42) lies in a contact plane (E42),
wherein the at least one wear sensor (30) is designed to monitor the state of wear of the bearing shell (44) by determining a distance of the contact plane (E42) to a part of the fifth-wheel coupling plate (2), in particular a measuring surface (8) of the fifth-wheel coupling plate (2).

5. The fifth-wheel coupling arrangement (1) according to claim 4,
wherein the measuring surface (8) is concave.

6. The fifth-wheel coupling arrangement (1) according to claim 4 or 5,
wherein the measuring surface (8) is part of a tensioning device (45).

7. The fifth-wheel coupling arrangement (1) according to any one of the preceding claims,
wherein at least one wear sensor (30) is a non-contact sensor, in particular an ultrasonic sensor.

8. The fifth-wheel coupling arrangement (1) according to any one of the preceding claims,
wherein at least one wear sensor (30) is designed to monitor a play, in particular due to wear, of a part of the locking mechanism (20),
in particular by determining the distance of the part of the locking mechanism (20) to a measuring point of the fifth-wheel coupling plate (2), advantageously in the direction of the second closing direction (SR2).

9. The fifth-wheel coupling arrangement (1) according to any one of the preceding claims,
wherein at least one wear sensor (30) is a vibration sensor.

10. The fifth-wheel coupling arrangement (1) according to claim 9,
wherein the vibration sensor monitors the vibrations of the lock claw (10), in particular in the direction of the first closing direction (SR1), and/or
wherein the fifth-wheel coupling arrangement (1) comprises a king pin, and
wherein the vibration sensor monitors the vibrations of the king pin.

11. The fifth-wheel coupling arrangement (1) according to claim 9 or 10,
wherein the fifth-wheel coupling arrangement (1) comprises at least two wear sensors (30) that are vibration sensors.

12. The fifth-wheel coupling arrangement (1) according to claim 11,
wherein the fifth-wheel coupling arrangement (1) has two of the vibration sensors connected to a comparison unit,
wherein the comparison unit is designed to compare the measurement results of the vibration sensors, and
wherein the comparison unit is designed to determine a state of wear of the fifth-wheel coupling from the comparison of the measurement results.

13. The fifth-wheel coupling arrangement (1) according to any one of the preceding claims,
wherein the data output of at least one wear sensor (30), in particular all data outputs of the wear sensors (30), is/are connected in terms of information technology to an evaluation unit (60),
wherein the evaluation unit (60) is designed to determine a state of wear of the fifth-wheel coupling arrangement (1) on the basis of the monitoring data of the wear sensor (30).

14. The fifth-wheel coupling arrangement (1) according to claim 13, wherein the evaluation unit (60) is connected to a display unit (62), wherein the display unit (62) is designed to display the state of wear of the fifth-wheel coupling arrangement (1) determined by the evaluation unit (60).

## Revendications

1. Ensemble de sellette d'attelage (1), comprenant
au moins un capteur d'usure (30), de préférence une pluralité de capteurs d'usure (30),
un plateau de sellette d'attelage (2),
une griffe de serrure (10) montée directement et/ou indirectement sur le plateau de sellette d'attelage (2) de façon mobile dans une première direction de fermeture (SR1),
un mécanisme de verrouillage (20) monté directement et/ou indirectement sur le plateau de sellette d'attelage (2) de façon mobile dans une deuxième direction de fermeture (SR2), en particulier comprenant une butée (22),
dans lequel
le plateau de sellette d'attelage (2) présente une ouverture d'insertion (4) pour un pivot d'attelage,
dans un état fermé de l'ensemble de sellette d'attelage (1), la griffe de serrure (10) empêche indirectement et/ou directement en coopération de forme une extraction du pivot d'attelage hors de l'ouverture d'insertion (4), et dans un état ouvert de l'ensemble de sellette d'attelage (1), elle permet une extraction du pivot d'attelage hors de l'ouverture d'insertion (4),
le capteur d'usure (30) est conçu pour surveiller un paramètre d'usure de l'ensemble de sellette d'attelage (1), et
le capteur d'usure (30) présente une sortie de données, en particulier un câble,
**caractérisé en ce que**
au moins un capteur d'usure (30) est conçu pour déterminer et/ou surveiller une épaisseur de matériau du plateau de sellette d'attelage (2), en particulier dans la zone d'une surface d'appui de semi-remorque (6).

2. Ensemble de sellette d'attelage (1) selon la revendication 1,
dans lequel l'ensemble de sellette d'attelage (1) présente au moins deux, de préférence au moins trois, capteurs d'usure (30),
lesdits au moins deux, de préférence au moins trois, capteurs d'usure (30) surveillent avantageusement différents paramètres d'usure de l'ensemble de sellette d'attelage (1).

3. Ensemble de sellette d'attelage (1) selon l'une des revendications précédentes,
dans lequel l'ensemble de sellette d'attelage (1) comprend au moins un support de coussinet (40) et une coquille de coussinet (44),
la coquille de coussinet (44) soutient le plateau de sellette d'attelage (2) par rapport au support de coussinet (40),
le support de coussinet (40) présente une surface de contact (42),
la surface de contact (42) est conçue pour soutenir directement et/ou indirectement le support de coussinet (40) sur un véhicule,
au moins un capteur d'usure (30) est conçu pour surveiller l'état d'usure de la coquille de coussinet (44).

4. Ensemble de sellette d'attelage (1) selon la revendication 3,
dans lequel la surface de contact (42) est située dans un plan de contact (E42),
ledit au moins un capteur d'usure (30) est conçu pour surveiller l'état d'usure de la coquille de coussinet (44) en déterminant une distance du plan de contact (E42) par rapport à une partie du plateau de sellette d'attelage (2), en particulier par rapport à une surface de mesure (8) du plateau de sellette d'attelage (2).

5. Ensemble de sellette d'attelage (1) selon la revendication 4,
dans lequel la surface de mesure (8) est concave.

6. Ensemble de sellette d'attelage (1) selon la revendication 4 ou 5,
dans lequel la surface de mesure (8) fait partie d'un étrier de serrage (45).

7. Ensemble de sellette d'attelage (1) selon l'une des revendications précédentes,
dans lequel au moins un capteur d'usure (30) est un capteur sans contact, en particulier un capteur à ultrasons.

8. Ensemble de sellette d'attelage (1) selon l'une des revendications précédentes,
dans lequel au moins un capteur d'usure (30) est conçu pour surveiller un jeu, en particulier dû à l'usure, d'une partie du mécanisme de verrouillage (20), en particulier en déterminant la distance de la partie du mécanisme de verrouillage (20) par rapport à un point de mesure du plateau de sellette d'attelage (2), avantageusement dans le sens de la deuxième direction de fermeture (SR2).

9. Ensemble de sellette d'attelage (1) selon l'une des revendications précédentes,
dans lequel au moins un capteur d'usure (30) est un capteur de vibrations.

10. Ensemble de sellette d'attelage (1) selon la revendication 9,
dans lequel le capteur de vibrations surveille les oscillations de la griffe de serrure (10), en particulier dans le sens de la première direction de fermeture (SR1), et/ou
l'ensemble de sellette d'attelage (1) présente un pivot d'attelage, et
le capteur de vibrations surveille les oscillations du pivot d'attelage.

11. Ensemble de sellette d'attelage (1) selon la revendication 9 ou 10, dans lequel l'ensemble de sellette d'attelage (1) comprend au moins deux capteurs d'usure (30) qui sont des capteurs de vibrations.

12. Ensemble de sellette d'attelage (1) selon la revendication 11,
dans lequel deux des capteurs de vibrations de l'ensemble de sellette d'attelage (1) sont reliés à une unité de comparaison,
l'unité de comparaison est conçue pour comparer les résultats de mesure des capteurs de vibrations, et
l'unité de comparaison est conçue pour déterminer l'état d'usure de la sellette d'attelage à partir de la comparaison des résultats de mesure.

13. Ensemble de sellette d'attelage (1) selon l'une des revendications précédentes,
dans lequel la sortie de données d'au moins un capteur d'usure (30), en particulier toutes les sorties de données des capteurs d'usure (30), est/sont reliée(s) par voie informatique à une unité d'évaluation (60),
l'unité d'évaluation (60) est conçue pour déterminer un état d'usure de l'ensemble de sellette d'attelage (1) sur la base des données de surveillance du capteur d'usure (30).

14. Ensemble de sellette d'attelage (1) selon la revendication 13,
dans lequel l'unité d'évaluation (60) est reliée à une unité de représentation (62),
l'unité de représentation (62) est conçue pour représenter l'état d'usure, déterminé par l'unité d'évaluation (60), de l'ensemble de sellette d'attelage (1).
